# EUROPÄISCHE PATENTSCHRIFT

(11) **EP 3 354 619 B1**
(45) Veröffentlichungstag und Bekanntmachung des Hinweises auf die Patenterteilung: **19.12.2018**
(21) Anmeldenummer: 17153222.9
(22) Anmeldetag: 26.01.2017
(51) Int. Cl.: B67D 3/00, B67D 7/02, B67D 7/32, B67D 1/08

(54) **ENTNAHMESYSTEM**
RETRIEVAL SYSTEM
SYSTÈME DE PRÉLÈVEMENT

(43) Veröffentlichungstag der Anmeldung: 01.08.2018
(73) Patentinhaber: as Strömungstechnik GmbH, 73760 Ostfildern (DE)
(72) Erfinder: Szeteli, Andreas, 70794 Ostfildern (DE)
(74) Vertreter: Ruckh, Rainer Gerhard

(56) Entgegenhaltungen:
- WO-A1-98/49090
- WO-A1-03/045831
- WO-A1-03/045834
- WO-A2-92/00914
- DE-A1-102013 109 799
- DE-A1-102013 110 020

## Beschreibung

Die Erfindung betrifft ein Entnahmesystem gemäß dem Oberbegriff des Anspruchs 1.

Ein derartiges Entnahmesystem dient generell zum Befüllen und Entleeren von Behältern, insbesondere von Fässern, die mit flüssigen Chemikalien befüllt sind. Zum Befüllen oder Entleeren des Behälters weist der Behälter ein Tauchrohr auf, das typischerweise in der Decke des Behälters gelagert ist und von dort in den Innenraum des Behälters ragt. Um eine Zufuhr von Flüssigkeit in den Behälter oder eine Entnahme von Flüssigkeit aus dem Behälter zu ermöglichen, wird am Tauchrohr ein Entnahmekopf befestigt. Dieser ist über Leitungen an eine Pumpe angeschlossen, mittels derer Flüssigkeit in den Behälter gepumpt wird oder aus diesem herausgepumpt wird.

Ein derartiges Entnahmesystem ist aus der DE 10 2013 110 020 A1 bekannt. Bei diesem Entnahmesystem ist am Entnahmekopf ein Schalter vorgesehen, der signalisiert, ob der Entnahmekopf in einer Sollposition am Tauchrohr befestigt ist oder nicht. Durch diesen Schalter können somit fehlerhafte Befestigungen des Entnahmekopfs am Tauchrohr erkannt und mit einer Warnmeldung oder dergleichen angezeigt werden. Das Bedienpersonal kann damit die unzureichende Befestigung erkennen und dann Gegenmaßnahmen einleiten.

Ein Problem bei derartigen Entnahmesystemen besteht darin, dass auch eine anfangs korrekte Verbindung zwischen Tauchrohr und Entnahmekopf durch mechanische Störeinflüsse und dergleichen gelockert oder gelöst werden kann, was mit einem derartigen Schalter nicht oder erst dann, wenn über den gelockerten Verschluss Flüssigkeit aus dem Behälter austreten kann, erfasst wird. Ein Auftreten derartiger Störungen ist insbesondere dann zu befürchten, wenn zur Entnahme oder Befüllung von Flüssigkeit das Entnahmesystem des Behälters mit einer Membranpumpe verbunden ist. Derartige Membranpumpen generieren Vibrationen, die über das Schlauch- oder Leitungssystem zum Entnahmesystem übertragen werden. Durch diese Vibrationen kann die Verschraubung des Entnahmekopfs am Tauchrohr gelockert werden. Dadurch wird diese Verbindung undicht und es kann unkontrolliert Flüssigkeit austreten. Um derartige Fehler zu beheben, muss der Betrieb des Entnahmesystems unterbrochen werden und die Verbindung zwischen Entnahmekopf und Tauchrohr wieder korrekt hergestellt werden, was zeitaufwändig ist und zu entsprechend hohen Stillstandszeiten führt.

Der Erfindung liegt die Aufgabe zugrunde, ein Entnahmesystem der eingangs genannten Art bereitzustellen, welches bei geringem konstruktivem Aufwand eine erhöhte Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Entnahmesystem für einen Behälter und umfasst einen am Behälter gelagertes und in diesen ragendes Tauchrohr sowie einen Entnahmekopf, welcher mittels einer Drehverbindung am Tauchrohr befestigbar ist. Der am Tauchrohr befestigte Entnahmekopf ist mittels einer mechanischen Verriegelungseinheit gesichert.

Mit der erfindungsgemäßen mechanischen Verriegelungseinheit wird auf einfache Weise die Funktionssicherheit des Entnahmesystems erhöht. Die mechanische Verriegelungseinheit sichert den Entnahmekopf in seiner Befestigungsstellung am Tauchrohr, wodurch gewährleistet ist, dass sich die Befestigung des Entnahmekopfs am Tauchrohr durch äußere Störeinflüsse nicht mehr lösen kann.

Insbesondere wird mit der mechanischen Verriegelungseinheit erreicht, dass auf das Entnahmesystem übertragene Vibrationen, die beispielsweise durch Membranpumpen verursacht sind, die zur Zufuhr oder Entnahme von Flüssigkeiten im Behälter dienen, keine unkontrollierte Lösung der Befestigung des Entnahmekopfs am Tauchrohr bewirken können.

Durch die mechanische Verriegelungseinheit als Sicherungssystem für ein Entnahmesystem werden somit unerwünschte Wartungsarbeiten oder Stillstandszeiten aufgrund von Leckagen an der Schnittstelle zwischen Entnahmekopf und Tauchrohr sicher vermieden. Damit ist eine störungsfreie Entnahme von Flüssigkeiten aus dem Behälter oder ein Zuführen von Flüssigkeiten in den Behälter über das Entnahmesystem gewährleistet.

Ein weiterer wesentlicher Vorteil der Erfindung besteht darin, dass die mechanische Verriegelungseinheit rein mechanisch und damit ohne elektrische Teile arbeitet. Die mechanische Verriegelungseinheit weist daher einen äußerst einfachen und kostengünstigen Aufbau auf. Weiterhin weist die Konstruktion der mechanischen Verriegelungseinheit einen robusten und daher fehlersicheren Aufbau auf.

Gemäß einer vorteilhaften Ausgestaltung der Erfindung weist die mechanische Verriegelungseinheit ein Betätigungselement auf, welches in eine Verriegelungsstellung und in eine Freigabestellung führbar ist. In der Verriegelungsstellung blockiert das Betätigungselement die Drehverbindung zwischen Entnahmekopf und Tauchrohr. In der Freigabestellung gibt das Betätigungselement die Drehverbindung zwischen Entnahmekopf und Tauchrohr frei.

Das Betätigungselement ist vorzugsweise manuell entlang einer Führung oder allgemein zwangsgeführt zwischen der Verriegelungsstellung und der Freigabestellung bewegbar, wodurch auf sehr einfache Weise die Befestigung des Entnahmekopfs am Tauchrohr gesichert, insbesondere verriegelt oder bei Bedarf freigegeben werden kann, so dass sie gelöst werden kann. Weiter vorteilhaft ist, dass durch die zwei definierten Endpositionen, das heißt der Verriegelungsstellung und der Freigabestellung, die Blockierung und Freigabe der Befestigung des Entnahmekopfs am Tauchrohr eindeutig vorgegeben ist und dabei auch vom Bedienpersonal einfach kontrolliert werden kann.

Gemäß einer konstruktiv vorteilhaften Ausgestaltung ist das Betätigungselement ein Schieber, wobei der Schieber entlang einer parallel zur Längsachse des Tauchrohrs verlaufenden Achse verschiebbar ist.

Der Schieber bildet ein einfach bedienbares Bauteil, das zudem einfach und kostengünstig hergestellt werden kann.

Gemäß einer besonders vorteilhaften Ausführungsform weist die mechanische Verriegelungseinheit ein mit dem Tauchrohr fest verbundenes Verriegelungselement mit einer in Umfangsrichtung des Tauchrohrs umlaufenden diskreten Anordnung von Vorsprüngen auf. In der Verriegelungsstellung ist das Betätigungselement an einem Vorsprung oder zwischen zwei Vorsprüngen gesichert.

Das mit dem Betätigungselement zusammenwirkende Verriegelungselement ermöglicht eine besonders einfache und zugleich zuverlässige Sicherung des Entnahmekopfs in seiner Befestigungsstellung am Tauchrohr.

Weiterhin vorteilhaft ist, dass die mechanische Verriegelungseinheit bestehend aus Betätigungselement und Verriegelungselement ein modulares System bildet, das auch an bestehenden Entnahmesystemen nachgerüstet werden kann.

Dabei ist insbesondere vorteilhaft, dass das Verriegelungselement mehrere Vorsprünge aufweist, die in der Verriegelungsstellung in Eingriff mit den Betätigungselementen gebracht werden können, um die Befestigung des Entnahmekopfs am Tauchrohr zu sichern. Dies gilt insbesondere für den Fall, dass der Entnahmekopf durch eine Verschraubung am Tauchrohr fixiert ist.

In diesem Fall gibt es keine eindeutige Befestigungslage zwischen Entnahmekopf und Tauchrohr, vielmehr hängt diese davon ab, wie fest die Verschraubung zwischen diesen Einheiten angezogen wird. Dementsprechend kann mit der Befestigungslage auch die Relativposition des Betätigungselements zum Verriegelungselement variieren.

Da das Verriegelungselement mehrere Vorsprünge aufweist, kann das Betätigungselement je nach Befestigungslage an dem Vorsprung gesichert werden, der gerade im Eingriffsbereich des Betätigungselements liegt. Die Flexibilität der mechanischen Verriegelungseinheit wird dadurch noch erhöht, dass das Betätigungselement dann, wenn kein Vorsprung im Eingriffsbereich des Betätigungselements liegt, auch zwischen zwei Vorsprüngen gesichert, insbesondere lagegesichert werden kann. Ein kleineres Spiel des Betätigungselements zwischen zwei benachbarten Vorsprüngen ist dabei unkritisch, da die damit zugelassene kleine Relativbewegung zwischen Entnahmekopf und Tauchrohr nicht zum Lösen der Befestigung zwischen diesen Einheiten derart führen kann, dass dadurch eine Leckage oder dergleichen entsteht.

Gemäß einer konstruktiv vorteilhaften Ausgestaltung ist der das Betätigungselement bildende Schieber in der Verriegelungsstellung an einem Vorsprung eingerastet oder liegt in einem Zwischenraum zwischen zwei Vorsprüngen.

Dabei weist der Schieber ein einen Hohlraum umschließendes Wandelement auf, wobei der Hohlraum an einer Stirnseite des Schiebers ausmündet. In einer Verriegelungsstellung des Schiebers ragt ein Vorsprung in den Hohlraum des Schiebers.

Mit dieser Ausführungsform wird eine besonders sichere Fixierung des Betätigungselements am jeweiligen Vorsprung erhalten.

Besonders vorteilhaft weist das Verriegelungselement ein ringförmiges Segment auf, welches das Tauchrohr in Umfangsrichtung umschließt. Am äußeren Rand des ringförmigen Segments münden die Vorsprünge in radialer Richtung aus.

Das so gebildete Verriegelungselement weist einen einfachen Aufbau auf und kann insbesondere als Formteil wie zum Bespiel als Kunststoff-Spritzgussteil rationell gefestigt werden.

Weiter vorteilhaft sind die Vorsprünge identisch ausgebildet und in äquidistanten Abständen in Umfangsrichtung des ringförmigen Segments angeordnet.

Durch die identische Ausbildung der Vorsprünge ist gewährleistet, dass das Betätigungselement an jedem Vorsprung in gleicher Weise einrasten kann. Durch die äquidistante Verteilung der Vorsprünge wird ein Maximum an möglichen Verriegelungsstellungen für das Betätigungselement bereitgestellt.

Weiter vorteilhaft sind am Verriegelungselement Stifte vorgesehen, mittels derer das Verriegelungselement am Tauchrohr fixiert ist.

Dem fest mit dem Tauchrohr verbundenen Verriegelungselement ist das relativ zu diesem beweglich gelagerte Betätigungselement zugeordnet.

Vorteilhaft ist hierbei das Betätigungselement an einem den Entnahmekopf in Umfangsrichtung umschließenden ringförmigen Aufsatz gelagert.

Zweckmäßig ist zur Fixierung des Entnahmekopfs am Tauchrohr der ringförmige Aufsatz an einer Aufnahme des Tauchrohrs verschraubt.

Damit wird ein modulares einfach handhabbares System zur Fixierung und Sicherung des Entnahmekopfs am Tauchrohr geschaffen.

Die Erfindung wird im Folgenden anhand der Zeichnungen erläutert. Es zeigen:
- Figur 1:: Schematische Darstellung eines Behälters mit einem Entnahmesystem sowie einer zugeordneten Pumpe.
- Figur 2:: Perspektivische Darstellung des erfindungsgemäßen Entnahmesystems.
- Figur 3:: Teilgeschnittene Darstellung des erfindungsgemäßen Entnahmesystems.
- Figur 4:: Detaildarstellung des Entnahmesystems gemäß den Figuren 2 und 3 mit einem Schieber in einer Freigabestellung.
- Figur 5:: Detaildarstellung des Entnahmesystems gemäß den Figuren 2 und 3 mit einem Schieber in einer Verriegelungsstellung.

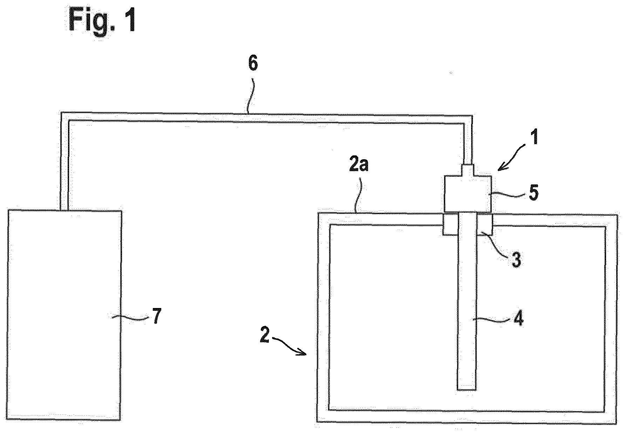

Figur 1 zeigt schematisch ein Entnahmesystem 1 an einem Behälter 2. In dem Behälter 2 ist eine Flüssigkeit gelagert. Bei den Flüssigkeiten, die in derartigen Behältern 2 gelagert werden, handelt es sich insbesondere um flüssige Spezialkomponenten.

In eine Behälteröffhung in der Decke 2a des Behälters 2 ist ein Spundkörper 3 gelagert. Dieser Spundkörper 3 dient zur Aufnahme eines Tauchrohrs 4 als erster Komponente des Entnahmesystems 1. Das Tauchrohr 4 verläuft in vertikaler Richtung und erstreckt sich bis dicht oberhalb des Bodens des Behälters 2.

An dem oberen Ende des Tauchrohrs 4 ist als weitere Komponente des Entnahmesystems 1 ein Entnahmekopf 5 befestigt, wobei die Befestigung des Entnahmekopfs 5 am Tauchrohr 4 allgemein in Form einer Drehverbindung, im vorliegenden Fall in Form einer Schraubverbindung ausgebildet ist.

An dem Entnahmekopf 5 ist ein Leitungssystem 6 angeschlossen, das mit einer Pumpe 7, wie zum Beispiel einer Membranpumpe verbunden ist. Bei auf dem Tauchrohr 4 befestigtem Entnahmekopf 5 kann mittels der Pumpe 7 über das Leitungssystem 6 Flüssigkeit aus dem Behälter 2 entnommen werden. Ebenso ist eine Zufuhr von Flüssigkeit in den Behälter 2 möglich.

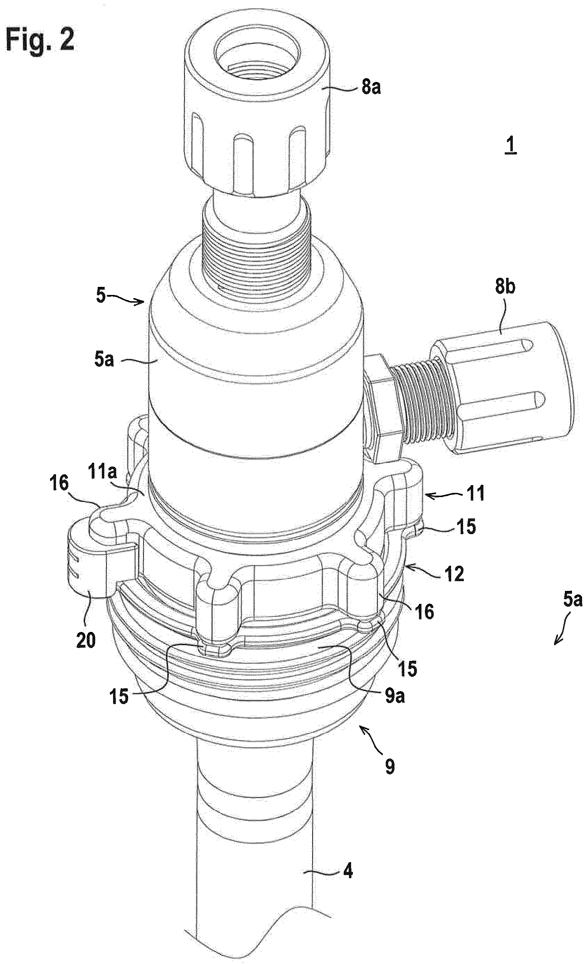

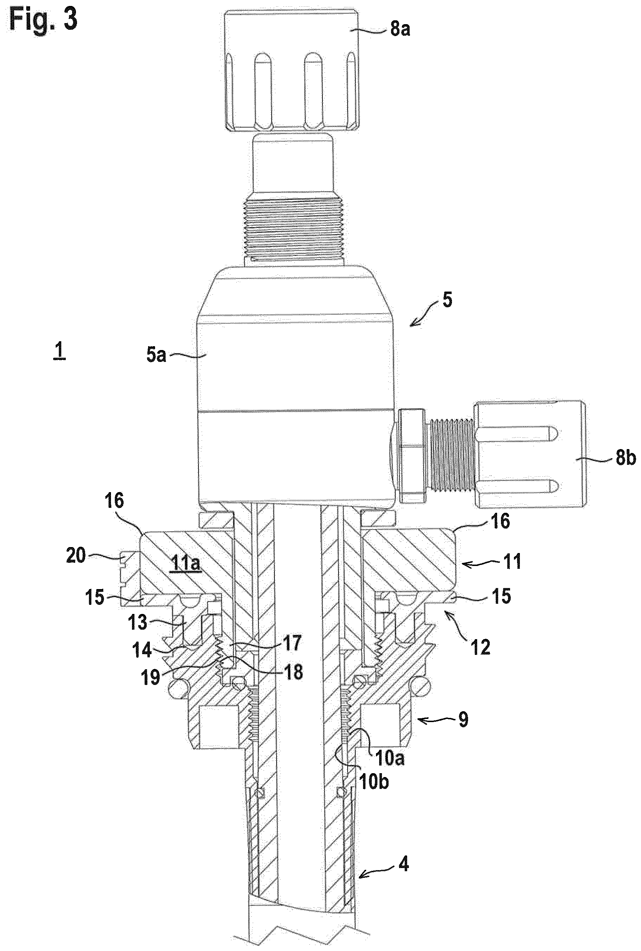

Die Figuren 2 und 3 zeigen ein Ausführungsbeispiel des erfindungsgemäßen Entnahmesystems 1.

Wie aus den Figuren 2 und 3 ersichtlich, weist der Entnahmekopf 5 des Entnahmesystems 1 zwei Anschlüsse 8a, 8b auf, die insbesondere zum Anschluss des Leitungssystems 6 dienen. An dem oberen Ende des hohlzylindrischen Tauchrohrs 4 ist ein Kopfteil 9 mit einer Schraubverbindung befestigt. Hierzu weisen das Tauchrohr 4 und das Kopfteil 9 entsprechende Gewinde 10a, 10b auf. Das Kopfteil 9, das Bestandteil des Tauchrohrs 4 ist, ist rotationssymmetrisch ausgebildet und weist eine ebene Oberseite auf, die eine Auflagefläche 9a ausbildet. Das Kopfteil 9 wird in dem Spundkörper 3 in der Behälteröffnung gelagert.

Der Entnahmekopf 5 weist einen Grundkörper 5a mit einer zylindrischen Mantelfläche auf, dessen Symmetrieachse mit der Symmetrieachse des Tauchrohrs 4 zusammenfällt, wenn der Entnahmekopf 5 am Tauchrohr 4 befestigt ist. Der untere Bereich des Grundkörpers 5a weist eine etwas geringere Breite auf. Dort sind als Komponenten des Entnahmekopfs 5 ein ringförmiger Aufsatz 11 und ein ebenfalls ringförmiges Verriegelungselement 12 gelagert, die die Mantelfläche des Grundkörpers 5a umschließen. Die Symmetrieachsen dieser Elemente fallen mit der Symmetrieachse des Entnahmekopfs 5 zusammen.

Das unterhalb des Aufsatzes 11 gelagerte Verriegelungselement 12 weist ein flaches, in einer Ebene verlaufendes ringförmiges Segment auf, das auf der Auflagefläche 9a des Kopfteils 9 des Tauchrohrs 4 aufliegt. Von der Unterseite des ringförmigen Segments des Verriegelungselements 12 stehen Stifte 13 hervor. Die Stifte 13 sind in Aussparungen 14 des Kopfteils 9, die an der Auflagefläche 9a ausmünden, eingerastet (Figur 3). Dadurch ist das Verriegelungselement 12 fest mit den Kopfteil 9 und damit dem Tauchrohr 4 verbunden.

An dem äußeren Rand des ringförmigen Segments des Verriegelungselements 12 münden Vorsprünge 15 aus, die in der Ebene des ringförmigen Segments verlaufen. Die Vorsprünge 15 sind identisch ausgebildet und in jeweils gleichen Abständen zueinander in Umfangsrichtung des Verriegelungselements 12 angeordnet.

Der ringförmige Aufsatz 11 weist einen ringförmigen Körper 11a auf, an welchem Vorsprungselemente 16 in radialer Richtung ausmünden (Figur 2). Die Vorsprungselemente 16 weisen eine den Vorsprüngen 15 des Verriegelungselements 12 entsprechende Anzahl, Anordnung und Querschnittskontur auf.

Wie Figur 3 zeigt, mündet an der Unterseite des ringförmigen Körpers 11a ein hohlzylindrisches Anschlussstück 17 aus. Das hohlzylindrische Anschlussstück 17 weist ein Außengewinde 18 auf, das in Eingriff mit einem Innengewinde 19 des Kopfteils 9 ist.

Während das Verriegelungselement 12 mittels der Stifte 13 fest mit dem Tauchrohr 4 verbunden ist, ist der ringförmige Aufsatz 11 drehbar gelagert. Mit dem ringförmigen Aufsatz 11 wird eine Schraubverbindung zwischen Entnahmekopf 5 und Tauchrohr 4 derart hergestellt, dass der ringförmige Aufsatz 11 mit dem Außengewinde 18 am Anschlussstück 17 am Innengewinde 19 des Kopfteils 9 festgeschraubt wird.

Sobald dieses Festschrauben erfolgt ist, ist der Entnahmekopf 5 am Tauchrohr 4 befestigt und der ringförmige Aufsatz 11 befindet sich in einer Befestigungslage.

Zur Sicherung der Befestigungslage und damit der gebildeten Schraubverbindung zwischen Entnahmekopf 5 und Tauchrohr 4 ist erfindungsgemäß ein Betätigungselement vorgesehen, das im vorliegenden Fall von einem Schieber 20 gebildet ist. Das Betätigungselement bildet mit dem Verriegelungselement 12 eine mechanische Verriegelungseinheit.

Das Betätigungselement ist an einem der Vorsprungselementen 16 des ringförmigen Aufsatzes 11 gelagert, wie insbesondere Figur 2 zeigt.

Der Schieber 20 ist von einem an seiner Unterseite offenen Hohlkörper gebildet. Das den Hohlraum des Schiebers 20 umschließende Wandelement ist, wie Figur 2 zeigt, an die Außenkontur des Vorsprungselements 16 angepasst. Der Schieber 20 kann in axialer Richtung am Vorsprungselement 16, das heißt in vertikaler Richtung zwischen einer oberen Endposition, die eine Freigabestellung bildet, und einer unteren Endposition, die eine Verriegelungsstellung bildet, verschoben werden.

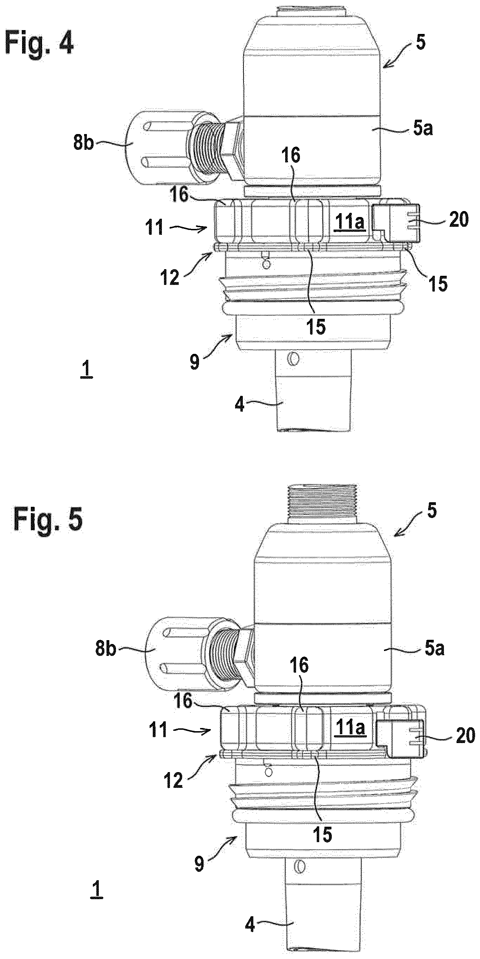

In der Freigabestellung (Figur 4) liegt der Schieber 20 oberhalb des Verriegelungselements 12. In dieser Freigabestellung des Schiebers 20 kann der ringförmige Aufsatz 11 ungehindert gegenüber dem Verriegelungselement 12 gedreht werden, insbesondere um die Schraubverbindung zwischen Tauchrohr 4 und Entnahmekopf 5 zu bilden.

Sobald die Schraubverbindung zwischen Tauchrohr 4 und Entnahmekopf 5 hergestellt ist, wird diese gegen ein unwerolltes, insbesondere durch äußere Störeinflüsse bewirktes Öffnen allein dadurch gesichert, dass der Schieber 20 in die Verriegelungsstellung überführt wird, was vorzugsweise manuell erfolgt.

Bei dem in Figur 5 dargestellten Fall liegen nach Herstellung der Schraubverbindung mittels des ringförmigen Aufsatzes 11 dessen Vorsprungselements 16 exakt oberhalb den Vorsprüngen 15 des Verriegelungselements 12. In diesem Fall wird bei Überführen des Schiebers 20 in die Verriegelungsstellung dieser Schieber 20 mit seinem Hohlraum über den darunter liegenden Vorsprung 15 gestülpt, so dass der untere Rand des Schiebers 20 den Vorsprung 15 umschließt. Damit ist der Schieber 20 an diesem Vorsprung 15 eingerastet, wodurch die Schraubverbindung zwischen ringförmigem Aufsatz 11 und Tauchrohr 4 blockiert ist, das heißt der Entnahmekopf 5 kann sich nicht mehr vom Tauchrohr 4 unkontrolliert lösen. Ein Lösen der Schraubverbindung ist erst dann wieder möglich, wenn der Schieber 20 in seine Freigabestellung nach oben geschoben wird.

Bei dem in Figur 2 dargestellten Fall liegen nach Herstellung der Schraubverbindung die Vorsprungselemente 16 des ringförmigen Aufsatzes 11 versetzt zu den Vorsprüngen 15 des Verriegelungselements 12. Wenn der Schieber 20 in die Verriegelungsstellung verschoben wird, (wie in Figur 2 dargestellt) liegt dieser zwischen zwei Vorsprüngen 15. Dadurch kann der ringförmige Aufsatz 11 nur noch so weit gedreht werden, wie sich der Schieber 20 zwischen den Vorsprüngen 15 bewegen kann. Dieser kleine Bewegungsfreiheitsgrad reicht jedoch nicht zum Lösen der Schraubverbindung, das heißt auch in diesem Fall ist die Schraubverbindung, mit der der Entnahmekopf 5 befestigt ist, durch die mechanische Verriegelungseinheit gegen ein unkontrolliertes Öffnen gesichert.

### Bezugszeichenliste

- (1): Entnahmesystem
- (2): Behälter
- (2a): Decke
- (3): Spundkörper
- (4): Tauchrohr
- (5): Entnahmekopf
- (5a): Grundkörper
- (6): Leitungssystem
- (7): Pumpe
- (8a, 8b): Anschluss
- (9): Kopfteil
- (9a): Auflagefläche
- (10a, 10b): Gewinde
- (11): ringförmiger Aufsatz
- (11a): ringförmiger Körper
- (12): Verriegelungselement
- (13): Stift
- (14): Aussparung
- (15): Vorsprung
- (16): Vorsprungselement
- (17): Anschlussstück
- (18): Außengewinde
- (19): Innengewinde
- (20): Schieber

## Patentansprüche

1. Entnahmesystem (1) für einen Behälter (2), mit einem am Behälter (2) gelagerten und in diesen ragenden Tauchrohr (4) und mit einem Entnahmekopf (5), welcher mittels einer Drehverbindung am Tauchrohr (4) befestigbar ist, **dadurch gekennzeichnet, dass** der am Tauchrohr (4) befestigte Entnahmekopf (5) mittels einer mechanischen Verriegelungseinheit gesichert ist.

2. Entnahmesystem nach Anspruch 1, **dadurch gekennzeichnet, dass** die mechanische Verriegelungseinheit ein Betätigungselement aufweist, welches in eine Verriegelungsstellung und in eine Freigabestellung führbar ist, wobei in der Verriegelungsstellung das Betätigungselement die Drehverbindung zwischen Entnahmekopf (5) und Tauchrohr (4) blockiert und in der Freigabestellung das Betätigungselement die Drehverbindung zwischen Entnahmekopf (5) und Tauchrohr (4) freigibt.

3. Entnahmesystem nach Anspruch 2, **dadurch gekennzeichnet, dass** das Betätigungselement ein Schieber (20) ist.

4. Entnahmesystem nach Anspruch 3, **dadurch gekennzeichnet, dass** der Schieber (20) entlang einer parallel zur Längsachse des Tauchrohrs (4) verlaufenden Achse verschiebbar ist.

5. Entnahmesystem nach einem der Ansprüche 2 bis 4, **dadurch gekennzeichnet, dass** die mechanische Verriegelungseinheit ein mit dem Tauchrohr (4) fest verbundenes Verriegelungselement (12) mit einer in Umfangsrichtung des Tauchrohrs (4) umlaufenden diskreten Anordnung von Vorsprüngen (15) aufweist, wobei in der Verriegelungsstellung das Betätigungselement an einem Vorsprung (15) oder zwischen zwei Vorsprüngen (15) gesichert ist.

6. Entnahmesystem nach Anspruch 5, **dadurch gekennzeichnet, dass** der das Betätigungselement bildende Schieber (20) in der Verriegelungsstellung an einem Vorsprung (15) eingerastet ist oder in einem Zwischenraum zwischen zwei Vorsprüngen (15) liegt.

7. Entnahmesystem nach Anspruch 6, **dadurch gekennzeichnet, dass** der Schieber (20) ein einen Hohlraum umschließendes Wandelement aufweist, wobei der Hohlraum an einer Stirnseite des Schiebers (20) ausmündet, und dass in einer Verriegelungsstellung des Schiebers (20) ein Vorsprung (15) in den Hohlraum des Schiebers (20) ragt.

8. Entnahmesystem nach einem der Ansprüche 5 bis 7, **dadurch gekennzeichnet, dass** das Verriegelungselement (12) ein ringförmiges Segment aufweist, welches das Tauchrohr (4) in Umfangsrichtung umschließt, und dass am äußeren Rand des ringförmigen Segments die Vorsprünge (15) in radialer Richtung ausmünden.

9. Entnahmesystem nach Anspruch 8, **dadurch gekennzeichnet, dass** die Vorsprünge (15) identisch ausgebildet und in äquidistanten Abständen in Umfangsrichtung des ringförmigen Segments angeordnet sind.

10. Entnahmesystem nach einem der Ansprüche 8 oder 9, **dadurch gekennzeichnet, dass** am Verriegelungselement (12) Stifte (13) vorgesehen sind, mittels derer das Verriegelungselement (12) am Tauchrohr (4) fixiert ist.

11. Entnahmesystem nach einem der Ansprüche 2 bis 10, **dadurch gekennzeichnet, dass** das Betätigungselement an einem den Entnahmekopf (5) in Umfangsrichtung umschließenden ringförmigen Aufsatz (11) gelagert ist.

12. Entnahmesystem nach einem der Ansprüche 1 bis 10, **dadurch gekennzeichnet, dass** der Entnahmekopf (5) durch eine Verschraubung am Tauchrohr (4) fixiert ist.

13. Entnahmesystem nach einem der Ansprüche 11 oder 12, **dadurch gekennzeichnet, dass** zur Fixierung des Entnahmekopfs (5) am Tauchrohr (4) der ringförmige Aufsatz (11) an einer Aufnahme des Tauchrohrs (4) verschraubt ist.

14. Entnahmesystem nach einem der Ansprüche 1 bis 13, **dadurch gekennzeichnet, dass** bei am Tauchrohr (4) befestigtem Entnahmekopf (5) über diesen Flüssigkeit aus dem Behälter (2) entnommen und in diesen eingefüllt werden kann.

## Claims

1. Retrieval system (1) for a container (2), with an immersion pipe (4) which is mounted on and projects into the container (2) and with an extraction head (5) by means of which a rotary connection is fastenable to the immersion pipe (4), **characterised in that** the extraction head (5) fastened to the immersion pipe (4) is secured by means of a mechanical locking unit.

2. Retrieval system according to claim 1, **characterised in that** the mechanical locking unit comprises an actuating element which can be guided into a locking setting and into a release setting, wherein in the locking setting the actuating element blocks the rotary connection between extraction head (5) and immersion pipe (4) and in the release setting the actuating element releases the rotary connection between extraction head (5) and immersion pipe (4).

3. Retrieval system according to claim 2, **characterised in that** the actuating element is a slide (20).

4. Retrieval system according to claim 3, **characterised in that** the slide (20) is displaceable along an axis extending parallel to the longitudinal axis of the immersion pipe (4).

5. Retrieval system according to any one of claims 2 to 4, **characterised in that** the mechanical locking unit comprises a locking element (12), which is fixedly connected with the immersion pipe (4), with a discrete arrangement, which encircles in circumferential direction of the immersion pipe (4), of projections (15), wherein in the locking setting the actuating element is secured to a projection (15) or between two projections (15).

6. Retrieval system according to claim 5, characterised the slide (20) forming the actuating element in the locking setting is detented at a projection (15) or lies in an intermediate space between two projections (15).

7. Retrieval system according to claim 6, **characterised in that** the slide (20) has a wall element enclosing a cavity, wherein the cavity opens at an end face of the slide (20), and that in a locking setting of the slide (20) a projection (15) projects into the cavity of the slide (20).

8. Retrieval system according to any one of claims 5 to 7, **characterised in that** locking element (12) comprises an annular segment which encloses the immersion pipe (4) in circumferential direction and that at the outer edge of the annular segment the projections (15) open out in radial direction.

9. Retrieval system according to claim 8, **characterised in that** the projections (15) are of identical construction and are arranged at equidistant spacings in circumferential direction of the annular segment.

10. Retrieval system according to one of claims 8 and 9, **characterised in that** provided at the locking element (12) are pins (13) by means of which the locking element (12) is fixed to the immersion pipe (4).

11. Retrieval system according to any one of claims 2 to 10, **characterised in that** the actuating element is mounted on an annular attachment (11) surrounding the extraction head (5) in circumferential direction.

12. Retrieval system according to any one of claims 1 to 10, **characterised in that** the extraction head (5) is fixed to the immersion pipe (4) by a screw connection.

13. Retrieval system according to one of claims 11 and 12, **characterised in that** for fixing of the extraction head (5) to the immersion pipe (4) the annular attachment (11) is screw-connected with a mount of the immersion pipe (4).

14. Retrieval system according to any one of claims 1 to 13, **characterised in that** when the extraction head (5) is fastened to the immersion pipe (4) liquid can be extracted from the container (2) by way of this and can be filled thereinto.

## Revendications

1. Système de soutirage (1) pour un récipient (2), avec un tube plongeur (4) monté sur le récipient (2) et pénétrant dans ce dernier, et avec une tête de soutirage (5) qui peut être fixée sur le tube plongeur (4) au moyen d'une liaison tournante, **caractérisé en ce que** la tête de soutirage (5) fixée sur le tube plongeur (4) est bloquée ou sécurisée au moyen d'une unité de verrouillage mécanique.

2. Système de soutirage selon la revendication 1, **caractérisé en ce que** l'unité de verrouillage mécanique présente un élément d'actionnement qui peut être amené dans une position de verrouillage et dans une position de libération, sachant que dans la position de verrouillage, l'élément d'actionnement bloque la liaison tournante entre la tête de soutirage (5) et le tube plongeur (4) et que dans la position de libération, l'élément d'actionnement libère la liaison tournante entre la tête de soutirage (5) et le tube plongeur (4).

3. Système de soutirage selon la revendication 2, **caractérisé en ce que** l'élément d'actionnement est un coulisseau (20).

4. Système de soutirage selon la revendication 3, **caractérisé en ce que** le coulisseau (20) peut coulisser le long d'un axe s'étendant parallèlement à l'axe longitudinal du tube plongeur (4).

5. Système de soutirage selon l'une des revendications 2 à 4, **caractérisé en ce que** l'unité de verrouillage mécanique présente un élément de verrouillage (12) fixement relié au tube plongeur (4) et doté d'un ensemble discontinu de saillies (15) faisant tout le tour dans la direction périphérique du tube plongeur (4), sachant que dans la position de verrouillage, l'élément d'actionnement est bloqué contre une saillie (15) ou entre deux saillies (15).

6. Système de soutirage selon la revendication 5, **caractérisé en ce que** le coulisseau (20) constituant l'élément d'actionnement, dans la position de verrouillage, est enclenché sur une saillie (15) ou se trouve dans un espace intermédiaire entre deux saillies (15).

7. Système de soutirage selon la revendication 6, **caractérisé en ce que** le coulisseau (20) présente un élément de paroi entourant un espace creux, sachant que l'espace creux débouche sur un côté frontal du coulisseau (20), et **en ce que**, dans une position de verrouillage du coulisseau (20), une saillie (15) pénètre dans l'espace creux du coulisseau (20).

8. Système de soutirage selon l'une des revendications 5 à 7, **caractérisé en ce que** l'élément de verrouillage (12) présente un segment annulaire qui entoure le tube plongeur (4) en direction périphérique, et **en ce que** les saillies (15) débouchent en direction radiale sur le bord extérieur du segment annulaire.

9. Système de soutirage selon la revendication 8, **caractérisé en ce que** les saillies (15) sont réalisées identiques et sont disposées à égales distances dans la direction périphérique du segment annulaire.

10. Système de soutirage selon l'une des revendications 8 ou 9, **caractérisé en ce que** des pointes (13) sont prévues sur l'élément de verrouillage (12), au moyen desquelles l'élément de verrouillage (12) est fixé en position sur le tube plongeur (4).

11. Système de soutirage selon l'une des revendications 2 à 10, **caractérisé en ce que** l'élément d'actionnement est monté sur un couronnement annulaire (11) entourant la tête de soutirage (5) en direction périphérique.

12. Système de soutirage selon l'une des revendications 1 à 10, **caractérisé en ce que** la tête de soutirage (5) est fixée en position sur le tube plongeur (4) par une liaison vissée.

13. Système de soutirage selon l'une des revendications 11 ou 12, **caractérisé en ce que**, pour la fixation en position de la tête de soutirage (5) sur le tube plongeur (4), le couronnement annulaire (11) est vissé sur une partie réceptrice du tube plongeur (4).

14. Système de soutirage selon l'une des revendications 1 à 13, **caractérisé en ce que**, lorsque la tête de soutirage (5) est fixée sur le tube plongeur (4), on peut au moyen de celle-ci soutirer du liquide du récipient (2) et remplir du liquide dans ce dernier.
